# EUROPEAN PATENT SPECIFICATION

(11) **EP 2 164 795 B1**
(45) Date of publication and mention of the grant of the patent: **03.04.2013**
(21) Application number: 08762458.1
(22) Date of filing: 24.06.2008
(51) Int. Cl.: B67D 1/08, B67D 1/00

(54) **POINT-OF-USE DRINKING WATER COOLER**
POINT-OF-USE-TRINKWASSERKÜHLER
DISPOSITIF DE REFROIDISSEMENT D'EAU POTABLE SUR SITE

(30) Priority: 28.06.2007 GB 0712515
(43) Date of publication of application: 24.03.2010
(73) Proprietor: EBAC LIMITED, Bishop Auckland, Devon DL14 9AL (GB)
(72) Inventor: WALTON, Philip Andrew, Bishop Auckland Durham DL14 6UF (GB)
(74) Representative: Craske, Stephen Allan
(86) International application number: PCT/GB2008/002146
(87) International publication number: WO 2009/001061

(56) References cited:
- DE-U1- 29 717 155
- US-A- 1 960 975
- US-A- 2 581 125

## Description

### TECHNICAL FIELD OF THE INVENTION

This invention relates to point-of-use drinking water coolers.

### BACKGROUND

Water purification units are often used to sterilise water from a non-sanitized supply such as a well or borehole. The incoming water is usually filtered before entering a sterilising chamber, which may include an ultra violet (UV) sterilising lamp or other means to kill any microorganisms present in the water. Such units sometimes incorporate a cooling system for cooling the water prior to dispensing.

Bottled water generally has an inherently higher level of cleanliness, but modern bottled water dispensers also incorporate various measures for increasing the level of hygiene.

In addition to UV, other known methods of sterilisation include ozonation, heat-sterilisation and sources of heavy metal ions such as silver.

In so-called point-of-use water coolers, water is drawn from a piped potable water supply to which sterilising chemicals have already been added at source. The incoming water supply is therefore already free of potentially harmful organisms, but nevertheless, it is generally considered good practice to at least filter the incoming supply, and preferably remove any residual sterilising chemicals prior to consumption. Such filtration is normally carried out at the point of entry into the water cooler since this has the advantage that debris is prevented from entering the cooling chamber. In addition, the thermal mass of water between the cooling chamber and the dispensing point is kept small so that cooled water can be dispensed on demand. On the other hand, it is necessary to take measures to combat bacterial growth within the cooler by periodically sanitizing the water-contact surfaces.

A similar water dispenser with cooler and filter is disclosed in US 1 960 975.

The present invention seeks to provide a new and inventive point-of-use water cooler which possesses a high level of hygiene, is quick and easy to maintain, has a low energy consumption, and is also capable of supplying fully-cooled water immediately on demand.

### SUMMARY OF THE INVENTION

The present invention proposes a point-of-use drinking water cooler having:
- a thermally insulated chamber system containing a cooling medium which provides a thermal mass, the chamber system further incorporating:
   - a cooling element for cooling the cooling medium;
   - a water inlet for receiving treated water from a piped drinking water supply,
   - an outlet coupling,
   - a flow path for conducting treated drinking water from the water inlet through the chamber system to the outlet coupling, and
   - a seat for a filter cartridge, including a well which is at least partially surrounded by the cooling medium;
   and
- a filter cartridge for engagement with the seat, incorporating:
   - a filter housing for reception in the well,
   - a water filter located in the filter housing,
   - a connector for engagement with the outlet coupling,
   - a dispense outlet, and
   - a flow path leading from the connector, through the water filter to the dispense outlet.

Residual sanitizing chemicals in the water supply prevent bacterial growth within the chamber system. The water filter is cooled to ensure that cooled water can be dispensed on demand, and periodic replacement of the filter cartridge ensures that the filtration components remain sanitized.

In one embodiment of the invention the drinking water flowing through the chamber system acts as the cooling medium. In another embodiment the chamber system incorporates a drinking water conduit which travels through the cooling medium from the water inlet to the outlet coupling to carry treated drinking water through the cooling medium without mixing therewith.

The seat is preferably formed by part of the chamber system which is in thermal contact with the cooling medium. A preferred form of filter cartridge comprises a manifold for reception on the seat in thermal contact with the cooling medium, and the manifold incorporates passageways leading from the connector to the water filter and from the water filter to the dispense outlet.

### BRIEF DESCRIPTION OF THE DRAWINGS

The following description and the accompanying drawings referred to therein are included by way of non-limiting example in order to illustrate how the invention may be put into practice. In the drawings:
Figure 1 is a sectional view of a point-of-use drinking water cooler assembly in accordance with the invention;
Figure 2 is a sectional view of a replacement filter cartridge for use with the assembly;
Figure 3 is a sectional detail showing the outlet coupling of the assembly;
Figure 4 is a sectional view of a modified form of the water cooler of Fig. 1; and
Figure 5 is a schematic diagram showing a further modified form of the water cooler.

### DETAILED DESCRIPTION OF THE DRAWINGS

The drawings show various forms of cooling assembly for point-of-use drinking water coolers. In the drawings, corresponding parts have been given the same reference characters.

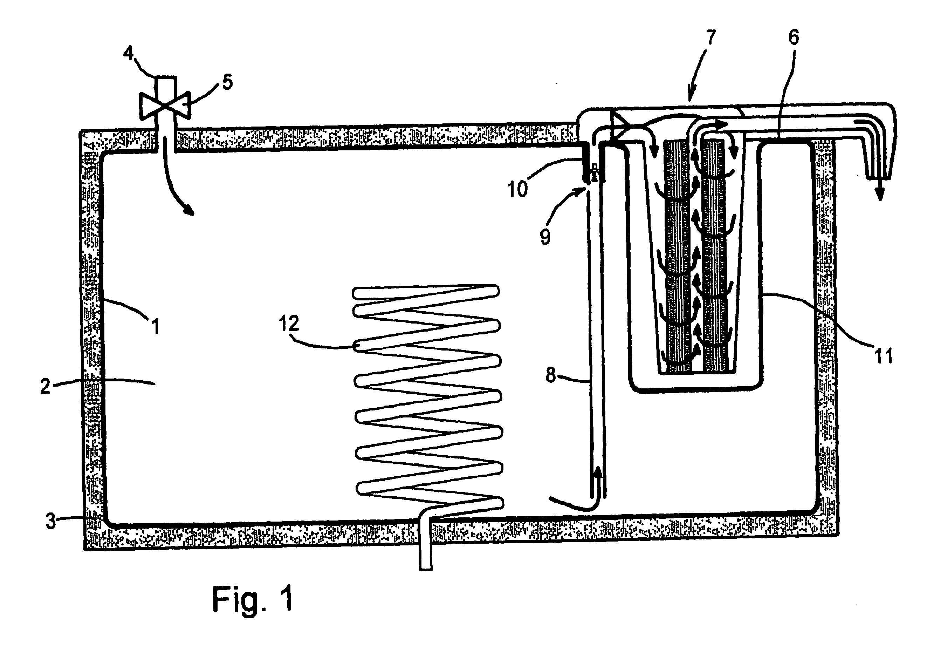

Referring firstly to **Fig. 1**, the assembly includes an outer casing 1 defining a chamber 2 surrounded by a thermally-insulating jacket 3, e.g. a body of polymer foam, a layer of fibrous material, or a double-walled vacuum jacket. A water inlet 4 is provided for connection to a piped water supply to receive potable water containing sterilising chemicals which have been added at source. The chamber 2 receives drinking water from the inlet 4 via a manually operated or solenoid operated dispense valve 5, so that the body of liquid within the chamber forms a thermal mass to act as a cooling medium. The casing 1 includes a seat 6 for a filter cartridge 7, which is described in more detail below. The seat 6 is formed by part of the casing 1 from which the layer of thermal insulation 3 has been omitted. The chamber 2 also contains a dip tube 8 leading from the bottom region of the chamber to an outlet coupling 10 which is incorporated in the seat 6. The dip tube 8 may have a vent aperture 9 near the top to assist the initial filling of the chamber 2. The seat 6 also includes a well 11 which is bathed in the cooling medium within the chamber 2.

A known form of cooling element 12 is provided for cooling the contents of the chamber 2, which may for example comprise the evaporator coil of a vapour compression refrigeration system, a thermoelectric cooling element, or similar. The assembly can also include other associated devices such as a temperature probe (not shown) which can be used to monitor the temperature of the cooling chamber 2 and control the cooling system.

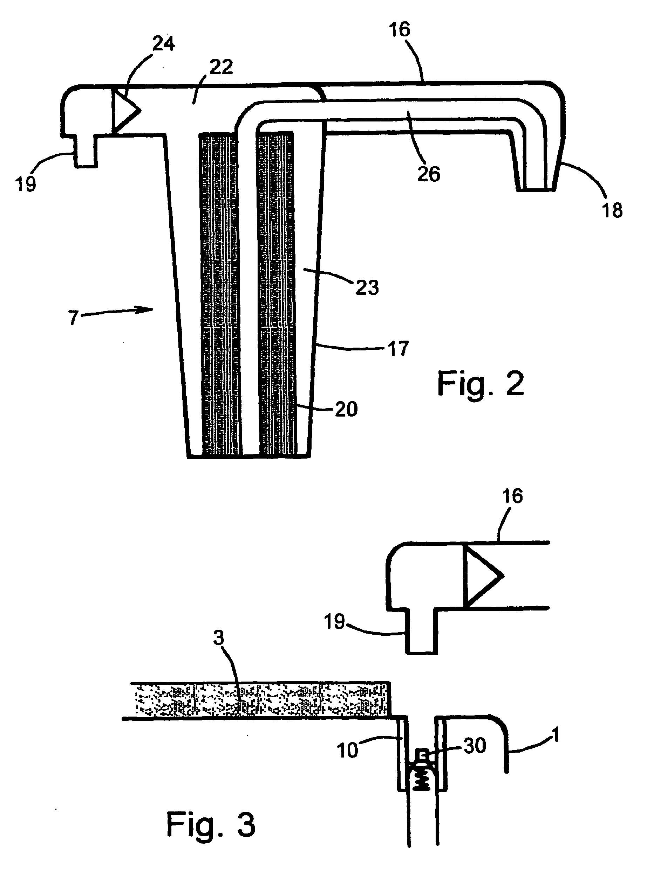

Referring to **Fig. 2**, the filter cartridge 7 includes a manifold body 16 which sits on the seat 6, a filter housing 17 which fits into the well 11, a dispense nozzle 18, and a spigot 19 which fits tightly into the coupling 10 in a sealable manner. The filter housing 17 contains a cylindrical filter 20, which may comprise a suitable microfilter, but could also incorporate active filtration materials to remove gases and chemicals from the water passing through the filter, e.g. an activated carbon filtration medium. The manifold 16 contains a transfer passage 22 for conducting water from the spigot 18 into an annular space 23 between the filter 20 and the filter housing 17. The transfer passage 22 may contain a pressure-operated non return valve 24 to prevent backflow of water into the cooling chamber 2. After passing through the filter the cleaned drinking water travels up the centre of the filter before re-entering the manifold 16 to pass through an outlet passage 26, which finally conducts the filtered water to the dispense nozzle 18.

The outlet coupling 10, which is shown in more detail in **Fig. 3**, incorporates a self-closing valve such as a spring-loaded valve element 30. Thus, when the filter cartridge is removed from the casing 1 the valve prevents escape of water from the cooling chamber 2 without the need to shut off the drinking water supply. The valve is opened by the spigot 19 when the filter cartridge is engaged with the seat 6, so that cooled water can flow into the filter cartridge.

The reservoir of pre-treated water within the chamber 2 which is cooled by the element 12 bathes the filter well 11 and also draws heat from the manifold through the seat 6 so that water remaining within the cartridge is held at substantially the same dispensing temperature as the cooling medium 2. When the dispense valve 5 is opened, ambient water flows into the chamber 2 whilst cooled water flows out of the dip tube 8 into the filter cartridge 7. Cooled water is immediately dispensed from the nozzle 18. The residual sterilising chemicals which enter the chamber 2 from the water supply maintain the contents of the chamber in a constantly sanitized condition, so that periodic sanitization maintenance of the chamber 2 is not required. The filter cartridge 7 can be replaced periodically to ensure that there is no bacterial growth in the filter cartridge, particularly in the area downstream of the filtration medium 20.

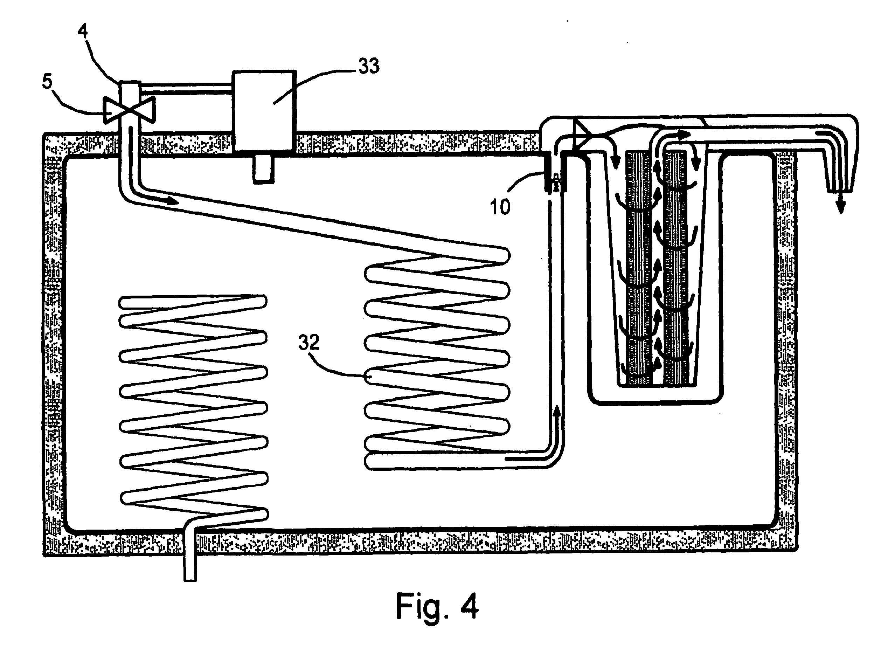

In the modified cooling assembly which is shown in **Fig. 4**, the drinking water inlet 4 is connected via the dispense valve 5 to a drinking water conduit 32 which may conveniently be formed into a coil within the chamber 2 before travelling to the outlet coupling 10. The conduit 32 thus defines to define a flow path for conducting treated water through the chamber in thermal contact with the cooling medium, thereby allowing the drinking water to be cooled by heat exchange through the wall of the conduit without intermixing with the cooling medium. The cooling medium is provided by water obtained from the inlet 4 via a top-up control device 33, e.g. a float-controlled valve, thereby ensuring that the chamber 2 is always filled with cooling medium.

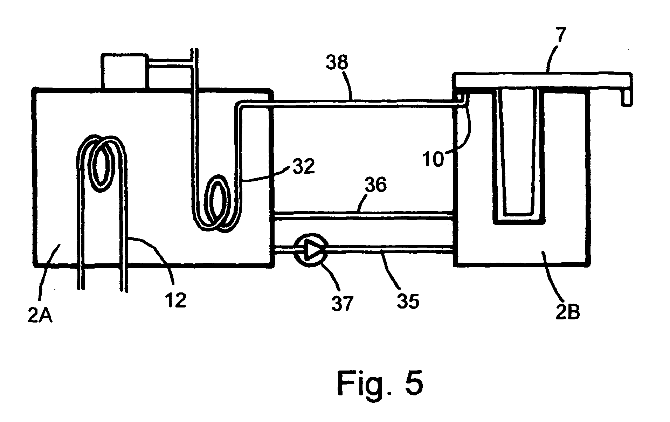

It is not essential for the filter cartridge to be installed in the same cooling chamber as the cooling element. Thus, in **Fig. 5** the cooling element 12 and the drinking water conduit 32 are mounted in a first chamber 2A while the filter cartridge 7 is engaged with a second chamber 2B. Circulation of cooling medium between the two chambers can take place through a flow conduit 35 connecting the bottom of the first chamber 2A to the bottom of the second chamber 2B and a return conduit 36 connecting upper regions of the chambers. The coolant circulation may be created by a circulation pump 37, by natural convention, or by conductive means, e.g. heat pipes. A drinking water transfer conduit 38 transfers cooled drinking water from the water conduit 32 in chamber 2A to the outlet coupling 10, without necessarily passing through the second chamber 2B. This arrangement might be easier to configure in some point-of-use coolers depending on internal layout constraints.

It may be advantageous to arrange for free-floating pieces of ice to be formed within the cooling chamber 2, or chambers 2A and 2B, in order to provide the cooling medium with a larger thermal buffer. This would allow a greater quantity of cooled drinking water to be dispensed on demand.

It is also possible to provide a supply of ambient water by feeding treated water through a second filter cartridge. The resulting ambient and cooled drinking water can also be mixed to dispense water at a desired intermediate temperature.

The dispense valve 5 could alternatively be provided between the cooling chamber and the filter cartridge or at the outlet from the filter cartridge.

In use, the cooling assembly will generally be housed in a case together with electrical and/or electronic control systems, switches or other manual input devices, and any associated refrigeration components.

Whilst the above description places emphasis on the areas which are believed to be new and addresses specific problems which have been identified, it is intended that the features disclosed herein may be used in any combination which is capable of providing a new and useful advance in the art.

## Claims

1. A point-of-use drinking water cooler having:
- a thermally insulated chamber system (2, 3) containing a cooling medium which provides a thermal mass, the chamber system further incorporating a cooling element (12) for cooling the cooling medium and a seat (6) for a filter cartridge;
and
- a filter cartridge (7) engaged with the seat, incorporating:
- a filter housing (17),
- a water filter (20) located in the filter housing,
- a dispense outlet (18),
- an inlet connector (19),
and
- a flow path (22, 23, 26) leading from the inlet connector (19), through the water filter to the dispense outlet (18);
the chamber system incorporates
- a water inlet (4) for receiving treated water from a piped drinking water supply,
- an outlet coupling (10),
- a flow path (2, 8) for conducting treated drinking water from the water inlet (4) through the chamber system to the outlet coupling (10),
**characterised in that**
the chamber further incorporates
- a well (11) for reception of the filter housing (17) which is at least partially surrounded by the cooling medium;
and the filter cartridge (7) is removably received in the well (11) with the inlet connector (19) releasably engaged with the outlet coupling (10) to receive water which has travelled through the flow path (2, 8) within the chamber system.

2. A point-of-use drinking water cooler according to Claim 1 in which the drinking water flowing through the chamber system acts as the cooling medium.

3. A point-of-use drinking water cooler according to Claim 2 in which the outlet coupling (10) draws cooled drinking water from a bottom region of the chamber system via a dip tube (8).

4. A point-of-use drinking water cooler according to Claim 1 in which the chamber system incorporates a drinking water conduit (32) which travels through the cooling medium from the water inlet (4) to the outlet coupling (10) to carry treated drinking water through the cooling medium without mixing therewith.

5. A point-of-use drinking water cooler according to Claim 4 which the cooling medium is supplied from the water inlet (4) via a top-up valve (33).

6. A point-of-use drinking water cooler according to Claim 1 in which the filter cartridge comprises a manifold (16) for reception on the seat (6) in thermal contact with the cooling medium, and the manifold incorporates passageways (22, 26) leading from the inlet connector (19) to the water filter (20) and from the water filter (20) to the dispense outlet (18).

## Patentansprüche

1. Point-of-Use-Trinkwasserkühler mit:
- einem thermisch isolierten Kammersystem (2, 3), das ein Kühlmedium mit einer thermischen Masse enthält, wobei das Kammersystem außerdem ein Kühlelement (12) zum Kühlen des Kühlmittels und einen Sitz (6) für eine Filterpatrone enthält; und
- einer mit dem Sitz in Eingriff stehenden Filterpatrone (7) mit:
- einem Filtergehäuse (17),
- einem In dem Filtergehäuse angeordneten Wasserfilter (20),
- einem Ausgabeauslass (18),
- einem Einlassanschluss (19), und
- einem Strömungsweg (22, 23, 26), der von dem Einlassanschluss (19) durch den Wasserfilter zu dem Ausgabeauslass führt;
wobei das Kammersystem aufweist:
- einen Wassereinlass (4) zum Empfangen von behandeltem Wasser aus einer Rohrleitungs-Trinkwasserversargung,
- eine Auslasskopplung (10),
- einen Strömungsweg (2, 8), um aufbereitetes Trinkwasser vom Wassereinlass (4) durch das Kammersystem zur Auslasskopplung (10) zu leiten,
**dadurch gekennzeichnet, dass**
- die Kammer außerdem einen Schacht (11) zur Aufnahme des Filtergehäuses (17) aufweist, der zumindest teilweise von dem Kühlmedium umgeben ist; und
- die Filterpatrone (7) herausnehmbar in dem Schacht (11) aufgenommen ist, wobei der Einlassanschluss (19) lösbar mit der Auslasskopplung (19) eingreift, um Wasser zu empfangen, das durch den Strömungsweg (2, 8) in dem Kammersystem geströmt ist.

2. Point-of-Use-Trinkwasserkühler nach Anspruch 1, bei dem das Trinkwasser, das durch das Kammersystem strömt, als das Kühlmedium dient.

3. Point-of-Use-Trinkwasserkühler nach Anspruch 2, bei dem die Auslasskopplung (10) gekühltes Trinkwasser über ein Tauchrohr (8) aus einem unteren Bereich des Kammersystems ansaugt.

4. Point-of-Use-Trinkwasserkühler nach Anspruch 1, bei dem das Kammersystem eine Trinkwasserleitung (32) aufweist, die von dem Wassereinlass (4) durch das Kühlmedium zur Auslasskopplung (10) verläuft, um aufbereitetes Trinkwasser durch das Kühlmedium zu transportieren, ohne damit vermischt zu werden.

5. Point-of-Use-Trinkwasserkühler nach Anspruch 4, bei dem das Kühlmedium von dem Wassereinlass (4) über ein Nachfüllventil (33) zugeführt wird.

6. Point-of-Use-Trinkwasserkühler nach Anspruch 1, bei dem die Filterpatrone einen Verteiler (16) aufweist, um an dem Sitz (6) in thermischem Kontakt mit dem Kühlmedium aufgenommen zu sein, und der Verteiler Durchgänge (22, 26) aufweist, die vom Einlassanschluss (19) zum Wasserfilter (20) und vom Wasserfilter (20) zum Ausgabeauslass (18) führen.

## Revendications

1. Dispositif de refroidissement d'eau potable sur site ayant :
- un système de chambre thermiquement isolé (2, 3) contenant un milieu de refroidissement qui fournit une masse thermique, le système de chambre incorporant en outre un élément de refroidissement (12) pour refroidir le milieu de refroidissement et un siège (6) pour une cartouche filtrante ;
et
- une cartouche filtrante (7) en prise avec le siège, incorporant :
- un boîtier de filtre (17),
- un filtre à eau (20) situé dans le boîtier de filtre,
- une sortie de distribution (18),
- un raccord d'entrée (19),
et
- un trajet d'écoulement (22, 23, 26) conduisant du raccord d'entrée (19) à la sortie de distribution (18) en passant par le filtre à eau ;
le système de chambre incorpore
- une entrée d'eau (4) pour recevoir de l'eau traitée en provenance d'une alimentation en eau courante potable,
- un raccord de sortie (10),
- un trajet d'écoulement (2, 8) pour conduire de l'eau potable traitée de l'entrée d'eau (4) au couplage de sortie (10) en passant par le système de chambre, **caractérisé par le fait que** la chambre incorpore en outre
- un puits (11) pour réception du boîtier de filtre (17) qui est au moins partiellement entouré par le milieu de refroidissement ;
et la cartouche filtrante (7) est reçue de manière amovible dans le puits (11) avec le raccord d'entrée (19) en prise de manière libérable avec le raccord de sortie (10) pour recevoir de l'eau qui a parcourue le trajet d'écoulement (2, 8) à l'intérieur du système de chambre.

2. Dispositif de refroidissement d'eau potable sur site selon la revendication 1, dans lequel l'eau potable s'écoulant à travers le système de chambre agit en tant que milieu de refroidissement.

3. Dispositif de refroidissement d'eau potable sur site selon la revendication 2, dans lequel le raccord de sortie (10) extrait de l'eau potable refroidie à partir d'une région inférieure du système de chambre par l'intermédiaire d'un tube plongeur (8).

4. Dispositif de refroidissement d'eau potable sur site selon la revendication 1, dans lequel le système de chambre incorpore une conduite d'eau potable (32) qui s'étend à travers le milieu de refroidissement de l'entrée d'eau (4) au raccord de sortie (10) pour transporter de l'eau potable traitée à travers le milieu de refroidissement sans mélange avec celui-ci.

5. Dispositif de refroidissement d'eau potable sur site selon la revendication 4, dans lequel le milieu de refroidissement est alimenté depuis l'entrée d'eau (4) par l'intermédiaire d'une vanne de remplissage (33).

6. Dispositif de refroidissement d'eau potable sur site selon la revendication 1, dans lequel la cartouche filtrante comprend un collecteur (16) pour réception sur le siège (6) en contact thermique avec le milieu de refroidissement, et le collecteur incorpore des passages (22, 26) conduisant du raccord d'entrée (19) au filtre à eau (20) et du filtre à eau (20) à la sortie de distribution (18).
